# EUROPEAN PATENT APPLICATION

(11) **EP 4 560 521 A1**
(43) Date of publication of application: **28.05.2025**
(21) Application number: 23868471.6
(22) Date of filing: 08.09.2023
(51) Int. Cl.: G06F 40/56, G06F 40/216, H04L 51/52, H04L 67/52, G06N 3/08, G06N 3/04, G06N 20/00, G06Q 10/10

(54) **ELECTRONIC DEVICE AND CONTROL METHOD THEREFOR**

(30) Priority: 19.09.2022 KR 20220117824
(71) Applicant: Samsung Electronics Co., Ltd., Suwon-si, Gyeonggi-do 16677 (KR)
(72) Inventor: YUN, Eunzu, Suwon-si Gyeonggi-do 16677 (KR); KIM, Junhee, Suwon-si Gyeonggi-do 16677 (KR); SHIN, Wooheun, Suwon-si Gyeonggi-do 16677 (KR); CHOI, Minchang, Suwon-si Gyeonggi-do 16677 (KR); HAN, Seohui, Suwon-si Gyeonggi-do 16677 (KR)
(74) Representative: Arnold & Siedsma
(86) International application number: PCT/KR2023/013496
(87) International publication number: WO 2024/063417

(57) **Abstract**

An electronic device is disclosed. The electronic device, which can generate a sentence, according to the present disclosure includes at least one sensor, a memory for storing at least one instruction, and at least one processor, which executes at least one instruction so as to obtain a plurality of data related to the daily life of a user based on a sensing value obtained from at least one sensor, determine an event related to a user corresponding to at least one data from among a plurality of data based on the similarity of the plurality of data, determine a plurality of keywords related to the event determined from the plurality of data, and generate at least one sentence corresponding to the event related to the user based on the plurality of keywords.

## Description

### [Technical Field]

The disclosure relates to an electronic device obtaining a plurality of data based on a sensing value obtained from at least one sensor to generate a sentence corresponding to an event related to a user.

### [Background Att]

An electronic device generating a sentence corresponding to an event related to a user may be applied and be used in various ways, for example, on a computer, a smart phone, a tablet PC, a laptop, etc. In particular, the electronic device may control a display to display the event related to the user, and a keyword and a sentence corresponding to the event.

### [Disclosure]

### [Technical Solution]

According to an embodiment of the disclosure, an electronic device capable of generating a sentence includes at least one sensor, memory storing at least one instruction, and at least one processor executing the at least one instruction. The at least one processor may obtain a plurality of data related to a daily life of a user based on a sensing value obtained from the at least one sensor, determine an event related to the user corresponding to at least one data of the plurality of data based on similarity of the plurality of data, determine a plurality of keywords related to the determined event based on the plurality of data, and generate at least one sentence corresponding to the event related to the user based on the plurality of keywords.

According to an embodiment of the disclosure, a method of controlling an electronic device capable of generating a sentence includes obtaining a plurality of data related to a daily life of a user based on a sensing value obtained from at least one sensor, determining an event related to the user corresponding to at least one data of the plurality of data based on similarity of the plurality of data, determining a plurality of keywords related to the determined event based on the plurality of data, and generating at least one sentence corresponding to the event related to the user based on the plurality of keywords.

According to an embodiment of the disclosure, an electronic device may include at least one sensor, memory storing at least one instruction, and at least one processor executing the at least one instruction, wherein a non-transitory computer readable medium storing computer instructions that when executed by the processor of the electronic device, cause the electronic device to obtain a plurality of data related to a daily life of a user based on a sensing value obtained from the at least one sensor, determine an event related to the user corresponding to at least one data of the plurality of data based on similarity of the plurality of data, determine a plurality of keywords related to the determined event based on the plurality of data, and generate at least one sentence corresponding to the event related to the user based on the plurality of keywords.

### [Description of Drawings]

FIG. 1 is a block diagram illustrating a configuration of an electronic device according to an embodiment;
FIG. 2 is a flow chart illustrating a process of determining a plurality of data as an event related to a user according to an embodiment;
FIG. 3 is a flow chart illustrating a process of calculating similarity of a plurality of data based on an Artificial Intelligence (AI) model according to an embodiment;
FIG. 4 is a view illustrating a process of calculating similarity of a plurality of data based on position data according to an embodiment, and FIG. 5 is a flow chart illustrating a process of generating and displaying a sentence on a display if a user input is received according to an embodiment of the disclosure;
FIGS. 6 to 7 are views illustrating a process of displaying an event related to a user on a display according to an embodiment;
FIG. 8 is a flow chart illustrating a process of obtaining a keyword statistic according to an embodiment;
FIG. 9 is a block diagram illustrating a detailed configuration of an electronic device according to an embodiment; and
FIG. 10 is a flow chart illustrating a method of generating a sentence according to an embodiment.

### [Mode for Invention]

Embodiments of the disclosure may be modified in various different forms and may have various embodiments, wherein specific embodiments will be exemplified in the drawings and specifically explained in the detailed description. However, it should be noted that the various embodiments are not for limiting the scope of the disclosure to a specific embodiment but should be interpreted to include all modifications, equivalents, and/or alternatives of the embodiments of the disclosure. With respect to the detailed description of the drawings, similar components may be designated by similar reference numerals.

In case it is determined that in describing the disclosure, the detailed description of related known functions or configurations may unnecessarily confuse the gist of the disclosure, the detailed description thereof will be omitted.

In addition, the embodiments below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

The terms used in the disclosure are used only to explain specific embodiments and are not intended to limit the scope of the disclosure. A singular expression includes a plural expression, unless obviously differently defined in the context.

In the disclosure, the expression such as "have," "may have," "include", or "may include" denotes the existence of such characteristic (e.g. a numerical value, a function, an operation, or a component such as a part), and the expression does not exclude the existence of an additional characteristic.

In the disclosure, the expression "A or B", "at least one of A and/or B", "one or more of A and/or B", or the like may include all possible combinations of the listed items. For example, "A or B", "at least one of A and B", or "at least one of A or B" may refer to all of the following cases: (1) including at least one A, (2) including at least one B, or (3) including all of at least one A and at least one B.

The expression "1st", "2nd", "first", "second", or the like used in the disclosure may be used to describe various elements regardless of any order and/or degree of importance, wherein the expression is used only to distinguish one element from another element and is not intended to limit the elements.

Meanwhile, the description that one element (e.g. a first element) is "(operatively or communicatively) coupled with/to" or "connected to" another element (e.g. a second element) should be interpreted such that the one element is directly coupled to the another element or the one element is coupled to the another element through the other element (e.g. a third element).

In contrast, the description that one element (e.g. a first element) is "directly coupled" or "directly connected" to another element (e.g. a second element) may be interpreted to mean that the other element (e.g. a third element) is not present between the one element and the another element.

The expression "configured to (or set to)" used in the disclosure may be interchangeably used with other expressions, for example, "suitable for", "having the capacity to", "designed to", "adapted to", "made to", or "capable of" depending on circumstances. The term "configured to (or set to)" may not necessarily mean that a device is "specifically designed to" in terms of hardware.

Instead, under some circumstances, the expression "a device configured to" may mean that the device "is capable of" performing an operation together with another device or component. For example, the phrase "at least one processor configured to (set to) perform A, B, and C" may mean at least one dedicated processor (e.g. at least one embedded processor) for performing the relevant operation or at least one general purpose processor (e.g. a CPU or an application processor) capable of performing the relevant operation by executing one or more software programs stored in a memory device.

In embodiments of the disclosure, a 'module' or 'part' may perform at least one function or operation and may be implemented as hardware or software, or as a combination of hardware and software. Also, a plurality of 'modules' or 'parts' may be integrated into at least one module and implemented as at least one processor, excluding 'module' or 'part' that needs to be implemented as specific hardware.

Meanwhile, various elements and areas in the drawings were illustrated schematically. Accordingly, the technical idea of the disclosure is not limited by the relative sizes or intervals illustrated in the appended drawings.

Hereinafter, with reference to the appended drawings, an embodiment according to the disclosure is specifically described to be easily embodied by those skilled in the art.

Today, an electronic device such as a smart device has been globally generalized and in particular, a distribution rate of a smart phone in Korea is high as 95%. Through this smart device, a plurality of data related to a daily life of a user such as position data, movement data, or photo data may be automatically collected.

Also, it has been generalized to record and share a daily life through many social network services (SNSs) and to record part which is not desired to be disclosed, an analog diary, a memo application, or a diary application is used in parallel.

A conventional smart device automatically collects a plurality of data related to a daily life of a user and simply manages data. For example, each of weather data, photo data, and location data is merely stored and displayed in each of weather graph, gallery, and travel route by date services as separate information, wherein the plurality of data is not organically combined and recorded.

With respect to the plurality of data as above, users may easily record their daily lives through the diary application or the SNS of the smart device but it is difficult for the users to organically manage records because these records may be easily volatilized. For example, there are many cases that an album of photos printed before 40 years remains, but rather photos captured by a smart phone used before 20 years do not remain. Also, due to a characteristic of the SNS which is sensitive to a trend, a service which is in fashion in each era among many social services is selected and used and thus, records between services are not organically connected. As an example, it is difficult to check records of daily lives recorded in each of the Cyworld, Facebook, and Instagram at once.

Therefore, an electronic device 100 according to an embodiment of the disclosure may obtain a plurality of data related to a daily life of a user, determine an event related to the user, determine a plurality of keywords related to the user to generate a sentence, and automatically record the daily life of the user by using the sentence. Furthermore, the electronic device 100 may provide an event related to the user such as a SNS post as a timeline in a card form.

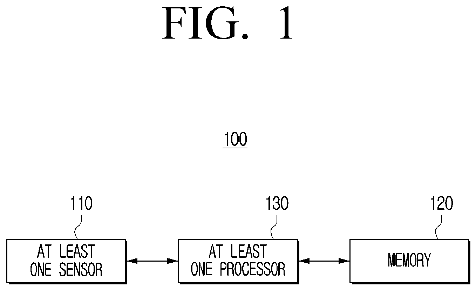

FIG. 1 is a block diagram for illustrating an operation of an electronic device according to an embodiment.

With reference to FIG. 1, the electronic device 100 may include at least one sensor 110, memory 120, and at least one processor 130.

The at least one sensor 110 may detect an operation state (e.g. electric power or a temperature) of the electronic device 100 or an external environment state (e.g. a user state) and may generate an electric signal or a data value corresponding to the detected state. That is, the at least one sensor 110 may obtain various and a plurality of data related to a user of the electronic device 100. According to an embodiment, the at least one sensor 110 may include a GPS which may obtain position data of the electronic device 100, at least one acceleration/gyro sensor which may obtain movement data of the electronic device 100, at least one temperature sensor, at least one humidity sensor, at least one image sensor which may take a photo, at least one grip sensor, at least one proximity sensor, at least one color sensor, at least one infrared (IR) sensor, at least one biometric sensor, at least one illumination sensor, at least one gesture sensor, at least one air pressure sensor, or at least one magnetic sensor.

The memory 120 may store temporarily or non-temporarily various programs or data and transmit the stored information to the at least one processor 130 according to a call of the at least one processor 130. Also, the memory 120 may store various information required for an operation, processing, a control operation, or the like of the at least one processor 130 as an electronic format.

The memory 120 may include, for example, at least one of main memory or auxiliary memory. The main memory may be implemented by using a semiconductor storage medium such as ROM and/or RAM. The ROM may include, for example, general ROM, EPROM, EEPROM, and/or MASK-ROM. The RAM may include DRAM and/or SRAM. An auxiliary storage may be implemented by using at least one storage medium which may permanently or semi-permanently store data such as a flash memory device, a Secure Digital (SD) card, a solid state drive (SSD), a hard disk drive (HDD), a magnetic drum, an optical medium such as a compact disk (CD), a DVD, or a laser disk, a magnetic tape, a magneto-optical disk and/or a floppy disk.

The memory 120 may store at least one instruction related to the electronic device 100. Further, the memory 120 may store an Operating System (O/S) for driving the electronic device 100. Also, the memory 120 may store various software programs or applications in order that the electronic device 100 operates according to various embodiments of the disclosure. Further, the memory 120 may include a magnetic storage medium such as semiconductor memory such as volatile memory such as a frame buffer or flash memory, or a hard disk.

The memory 120 may store at least one instruction.

The memory 120 may store a plurality of data related to a daily life of a user. Specifically, the memory 120 may store the plurality of data including at least one of location data, movement data, weather data, temperature data, date data, day data, time data, or photo data. Also, the memory 120 may store a plurality of keywords determined from a plurality of data and at least one sentence generated from the plurality of keywords. Further, the memory 120 may store an AI model for determining similarity of the plurality of data.

At least one processor 130 according to an embodiment of the disclosure may obtain a plurality of data related to a daily life of a user based on a sensing value obtained from at least one sensor 110. Here, the plurality of data may include context information related to a daily life of a user. Here, the context information may include a position, movement, weather, a temperature, a date, a day, time, a photo, etc.

Further, the at least one processor 130 may obtain a plurality of data related to a daily life of a user based on a sensing value obtained from at least one sensor.

Thereafter, the processor may determine an event related to a user corresponding to at least one data of the plurality of data based on similarity of the plurality of data.

Then, the processor may determine a plurality of keywords related to an event determined based on a plurality of data and generate at least one sentence corresponding to an event related to a user based on the determined plurality of keywords.

Here, the at least one processor 130 may calculate similarity of the plurality of data based on an AI model including at least one of the plurality of data, machine learning, a neural network, a gene, deep learning, or a classification algorithm.

Otherwise, the at least one processor 130 may determine first position data obtained first among a plurality of position data and may calculate similarity of the plurality of data based on a distance value between the first position data and second position data obtained after the first position data.

Alternatively, the at least one processor 130 may calculate similarity of the plurality of data based on a period in which a plurality of movement data is sustained.

Here, the plurality of data corresponding to the event may include at least one of location data, movement data, weather data, temperature data, date data, day data, time data, or photo data. Further, the at least one processor 130 may determine a plurality of keywords including at least one of a location keyword, a movement keyword, a weather keyword, a temperature keyword, a date keyword, a day keyword, a time keyword, or a photo keyword corresponding to the location data, the movement data, the weather data, the temperature data, the date data, the day data, the time data, or the photo data.

Still further, the at least one processor 130 may receive a user input corresponding to at least one of the plurality of keywords from the user and change at least one of the plurality of keywords based on the user input. That is, the at least one processor 130 may generate at least one sentence corresponding to an event related to the user based on the changed plurality of keywords.

Also, the at least one processor 130 may receive a user input corresponding to at least one sentence from the user and change at least one sentence based on the user input. Here, the at least one processor 130, if the user input is received, may analyze a component of at least one sentence corresponding to the user input and generate at least one sentence corresponding to an event related to the user.

Further, the electronic device 100 may further include a display 140 and display at least one of the plurality of data, the plurality of keywords, and at least one sentence corresponding to an event related to the user on the display.

Also, the at least one processor 130 may calculate the same number of keywords based on the plurality of keywords and obtain a keyword statistic based on the calculated number of keywords.

As above, operations of the at least one processor 130 are specifically described hereinafter.

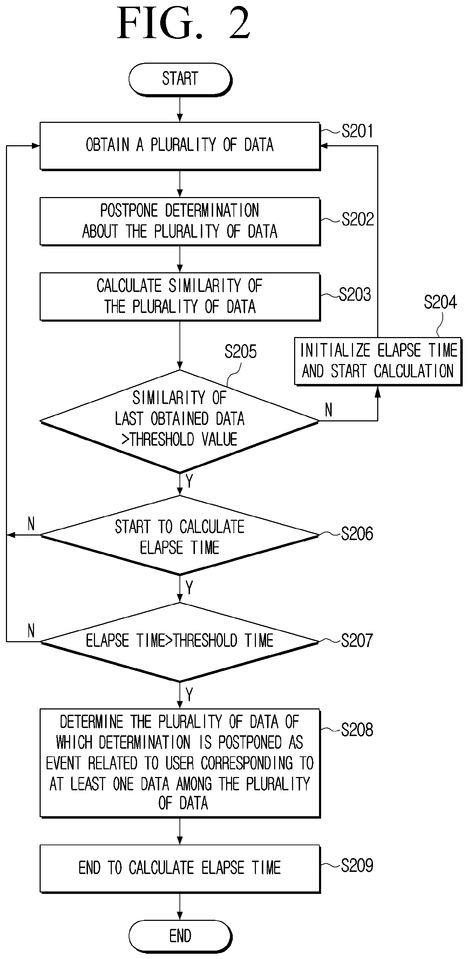

FIG. 2 is a flow chart illustrating a process of determining a plurality of data as an event related to a user according to an embodiment.

With reference to FIG. 2, the at least one processor 130 may determine an event related to the user corresponding to at least one data of the plurality of data based on similarity of the plurality of data.

Specifically, the at least one processor 130 may determine the plurality of data as an event related to the user based on a threshold value, an elapse time, and a threshold time. Here, the threshold value corresponds to a criterion for determining that similarity is low among the plurality of data. Further, the elapse time corresponds to a time elapsed after data having less than the threshold value is obtained. Also, the threshold time corresponds to a criterion for determining the plurality of data as an event related to the user by comparing with the threshold value.

To determine an event related to the user, first, the at least one processor 130 may obtain a plurality of data (S201).

Then, the at least one processor 130 may postpone determination about the plurality of data (S202). The reason why determination about the plurality of data is postponed after calculating similarity is because of considering that to determine an event related to the user based on only one data having low similarity may be incorrect. That is, an event related to the user may be determined in consideration of a noise of data.

Further, the at least one processor 130 may calculate similarity of the plurality of data (S203).

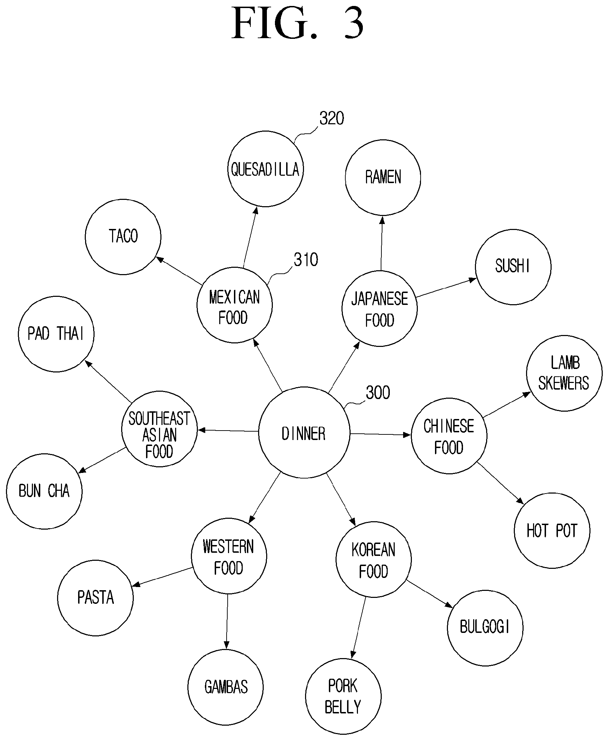

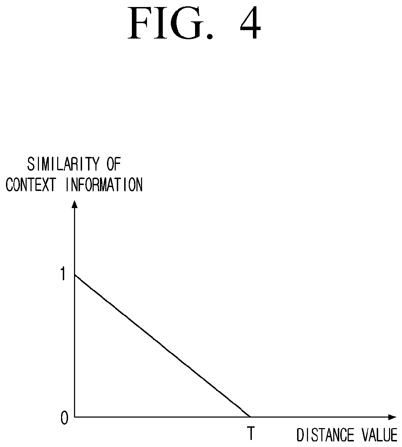

Here, similarity of the plurality of data is a numerically calculated degree determined as an event related to the user corresponding to at least one data of the plurality of data obtained by at least one processor 130. Hereinafter, with reference to FIGS. 3 and 4, a process of calculating similarity is described.

FIG. 3 is a flow chart illustrating a process of calculating similarity of a plurality of data based on an Artificial Intelligence (AI) model according to an embodiment.

With reference to FIG. 3, the at least one processor 130 may calculate similarity of the plurality of data based on an AI model including at least one of the plurality of data, machine learning, a neural network, a gene, deep learning, or a classification algorithm.

Here, the AI model may be composed of a plurality of neural network layers. Each layer has a plurality of weight values and performs an operation of a layer through an operation result of the previous layer and an operation of the plurality of weight values. An example of the neural network is a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), and a Deep Q-Network, wherein the neural network is not limited to the aforementioned example, excluding a case that the neural network is designated in the disclosure.

The at least one processor 130 may generate a knowledge graph related to a daily life of the user based on the AI model. Further, the at least one processor 130 may calculate similarity of the plurality of data based on the knowledge graph. The knowledge graph is a graph in which relevance between specific concepts and corresponds to a graph where a concept starting from one wide category is connected to a detailed concept. By using this knowledge graph, it is also possible to quantitatively measure similarity between two concepts. Specifically, the knowledge graph may express a concept related to a daily life of a user as a vertex and an edge connecting each vertex. Here, similarity between each concept may be calculated as the number of the edges connected to the vertex corresponding to each concept. Here, if the weight value is defined on the edge, similarity between concepts may be calculated in consideration of the relevant weight value.

As an example, movement data 'walking' is identified in a state that current position data is identified as 'park', the at least one processor 130 may calculate similarity between 'park' and 'walking' through the knowledge graph.

As another example, if 'quesadilla 320' is identified among 'Mexican food 310' by photo data in a state that 'dinner 300' is identified by the current position data and time data, at least one processor 130 may calculate similarity among position data, time data, and photo data which may be identified as dinner 300', 'Mexican food 310', and 'quesadilla 320'.

Meanwhile, the plurality of data may include a plurality of position data. The at least one processor 130 may determine first position data obtained first among a plurality of position data and may calculate similarity of the plurality of data based on a distance value between the first position data and second position data obtained after the first position data.

As an example, the at least one processor 130, if identifying that the first position data is (0 m, 0 m) and the second position data is (1500 m, 1700 m), may determine that a distance between the first position data and the second position data is 800 m. That is, the at least one processor 130 may calculate that similarity between the first position data and the second position data is low because it is general that an event related to a user in the first position data and an event related to the user in the second position are determined as a separate event.

FIG. 4 is a view illustrating a process of calculating similarity of a plurality of data based on position data according to an embodiment.

With reference to FIG. 4, the at least one processor 130 may calculate similarity of a plurality of data linearly low as a distance between the first position and the second position becomes farther. Meanwhile, the at least one processor 130 may calculate similarity of the plurality of data nonlinearly low as the distance between the first position and the second position becomes farther. Further, if the distance is determined as a certain distance T or more, the at least one processor 130 may calculate similarity of the plurality of data as 0. As above, a process of calculating similarity of the plurality of data according to the position data is merely an example and is not limited thereto.

Meanwhile, the plurality of data may include a plurality of movement data. Here, the movement data may include data related to a movement state such as a stop, walking movement, running movement, biking movement, and vehicle movement. The at least one processor 130 may calculate similarity of the plurality of data based on a period in which a plurality of movement data is sustained. As an example, if movement data of a 'stop' state is sustained for 30 minutes at a restaurant and after movement data of a 'walking movement' state is sustained for 5 minutes, the movement data of the 'stop' state is sustained for 20 minutes, the at least one processor 130 may determine the data as the plurality of data having high relevance to calculate similarity high.

Meanwhile, the plurality of data may include photo data. The at least one processor 130 may identify an object included in the photo data and may calculate similarity of the plurality of data based on the identified object. As an example, if photo data is identified as 'quesadilla' photographed in position data identified as 'restaurant', the at least one processor 130 may calculate similarity between the position data and the photo data high.

As above, after calculating similarity of the plurality of data, the at least one processor 130 may determine whether similarity of the plurality of data is greater than a threshold value (S204).

If similarity of the last obtained data is smaller than the threshold value, the at least one processor 130 may initialize an elapse time and start calculating the elapse time (S204). The elapse time corresponds to a time elapsed after the last plurality of data having low similarity among the plurality of data is obtained. For example, the elapse time corresponds to a time elapsed for obtaining a plurality of second data in case that the plurality of second data having low similarity with the previously obtained plurality of first data is obtained.

If similarity of the last obtained data among the plurality of data is greater than the threshold value, the at least one processor 130 may determine whether to start calculating the elapse time (S206). Here, if calculation of the elapse time does not start, the at least one processor 130 continuously proceeds to obtain the plurality of data.

If calculation of the elapse time starts, the at least one processor 130 may determine whether the elapse time is greater than the threshold time (S207). Here, if the elapse time is greater than the threshold time, the at least one processor 130 may consider that the last obtained data is not a noise and determine an event related to the user corresponding to at least one data of the plurality of data (S208). As an example, the at least one processor 130, if after obtaining a plurality of first data having high similarity with a 'restaurant', obtaining a plurality of second data having low similarity with the 'restaurant' and high similarity with a 'cafe', may initialize the elapse time and may start calculating an elapse time which is a time elapsed for obtaining the plurality of second data. As above, if the elapse time is elapsed for a certain time (a threshold time) or more, the at least one processor 130 may determine a plurality of first data having high similarity with the 'restaurant' as an event related to the user.

Further, the at least one processor 130 may end the calculation of the elapse time (S209).

As above, a process for determining an event related to the user may be repetitively performed and the at least one processor 130 may determine a plurality of events by repeating this process.

The at least one processor 130 may determine a plurality of keywords related to an event determined based on the plurality of data. That is, the at least one processor 130 may determine a plurality of keywords including at least one of a location keyword, a weather keyword, a temperature keyword, a date keyword, a day keyword, a time keyword, or a photo keyword corresponding to the location data, the weather data, the temperature data, the date data, the day data, the time data, or the photo data.

As an example, if a plurality of data corresponding to the event includes 'Latitude: 37.5581, Longitude: 126.9346, Movement: Stop, start time: March 07, 2022 18:27:41, end time: March 07, 2022 20:10:30, Temperature: 11 degrees, Humidity: 20, Weather: cloudy', the at least one processor 130 may determine keywords such as 'Mexican restaurant, quesadilla restaurant, dinner, cloudy night, Spring, Monday, Weekday, and 1~2 hours'.

Also, if the plurality of data includes photo data, the at least one processor 130 may recognize an object included in photo data and determine an additional keyword such as 'quesadilla, Mexican food, beer, or tequila'.

The at least one processor 130 may include a keyword inputted from the user besides a plurality of data based on a sensing value obtained from the at least one sensor. As an example, if the event related to the user is determined as being related to a theater, the at least one processor 130 may determine a type of movie, a genre of movie, or the like inputted from the user as a keyword.

As an example, in the case of an event determined as a 'dinner', the at least one processor 130 may determine 'quesadilla, beer, tequila, or the like' inputted from the user as a keyword.

The at least one processor 130 may generate at least one sentence corresponding to an event related to the user based on the plurality of keywords. If the plurality of keywords are determined, the at least one processor 130 may generate at least one sentence based on the AI model. The specific AI model is as aforementioned.

As an example, if the keywords such as 'Mexican food, dinner, cloudy, guesadilla, and happy' are determined, the at least one processor 130 may generate at least one sentence such as 'I had dinner at a place to sell Mexican food. It was cloudy but I was happy to have a guesadilla.'

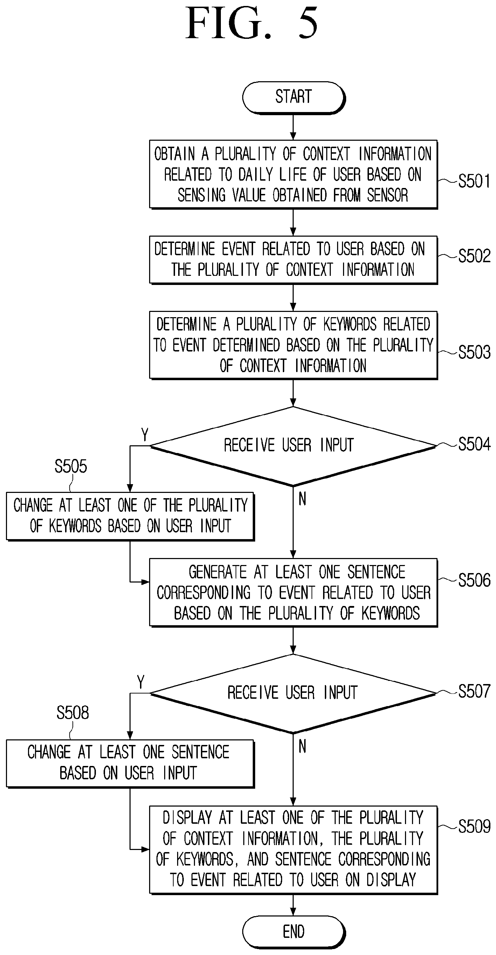

FIG. 5 is a flow chart illustrating a process of generating and displaying a sentence on a display if a user input is received according to an embodiment. Hereinafter, the detailed description about part overlapped with the description of FIG. 2 is omitted.

With reference to FIG. 5, the at least one processor 130 may receive a user input corresponding to at least one of the plurality of keywords from the user (S504). That is, the at least one processor 130 may receive at least one input of inputs for changing, adding, or deleting at least one of the plurality of keywords from the user. As above, if at least one of changing, adding, or deleting the plurality of keywords is inputted, the at least one processor 130 may change at least one of the plurality of keywords (S505).

As above, besides the case of receiving the input in that the user directly changes, adds, or deletes the keyword, the at least one processor 130 may transfer a question related to the keyword to the user to change at least one of the plurality of keywords. That is, the at least one processor 130 may transfer the question related to the keyword to the user with a means such as a push alarm or ordinary exposure of a message within a service and may receive a user input with respect to the question to change, add, or delete a keyword.

As an example, if 'theater CGV Dongsuwon' is determined as a location keyword, the at least one processor 130 may transfer a question such as 'is that the theater CGV Dongsuwon?' to the user. With respect to the question, the user input 'yes' is received, the at least one processor 130 determines the location keyword as 'theater'. On the contrary, if the user input 'no' is received, the at least one processor 130 may determine a location keyword again based on the location data and transfer a question to the user or may change a location keyword through the user input. As above, not only a keyword which may not be determined based on a sensing value but also a keyword which may not be determined based on the sensing value such as an emotion of the user or a vacation state of the user may be added through the user input.

Further, if the location keyword is determined as 'theater' through the above question, the at least one processor 130 may transfer a derivative question related to the location keyword to the user. As an example, if the location keyword is determined as 'theater' and the time keyword is determined as '2~4 hours', the at least one processor 130 may transfer a question about whether the user watched a movie or what movie the user watched to the user. On the contrary, if the time keyword is determined as 'less than one hour', the at least one processor 130 may consider the user's visit as a simple visit of the theater and may not transfer a derivative question to the user. As another example, if the position keyword is determined as 'restaurant', the at least one processor 130 may transfer a derivative question about what food the user had to the user or if the location keyword is determined as 'home', the at least one processor 130 may transfer a derivative question about what activity the user did at home to the user.

Further, the at least one processor 130 may generate at least one sentence corresponding to an event related to the user based on the changed plurality of keywords (S506). As an example, if the keywords such as 'Mexican food, dinner, cloudy, quesadilla, and happy' are determined but the user input for changing 'cloudy' to 'clear' is received, the at least one processor 130 may generate at least one sentence such as 'I had dinner at a place to sell Mexican food. I was happier to have a quesadilla on a clear day.'

Also, the at least one processor 130 may receive a user input corresponding to at least one sentence from the user (S507). That is, the at least one processor 130 may receive at least one user input of user inputs for changing, adding, or deleting the generated sentence.

As an example, the at least one processor 130, if determining the keywords such as 'Mexican food, dinner, cloudy, quesadilla, and happy' and then receiving the user input for changing the generated sentence such as 'I had dinner at a place to sell Mexican food. It was cloudy but I was happy to have a quesadilla.' to the sentence such as 'I was happy to have Mexican food, quesadilla, on a cloudy day.', may change the generated sentence to the sentence such as 'I was happy to have Mexican food, quesadilla, on a cloudy day.'

Here, the at least one processor 130, if receiving the user input, may analyze a component of at least one sentence corresponding to the user input and generate at least one sentence corresponding to an event related to the user. That is, the at least one processor 130 may learn a sentence component corresponding to a user input with the AI model based on deep learning. As a result, if a plurality of keywords are determined based on the plurality of data, the at least one processor 130 may generate a sentence corresponding to the learned sentence component. As an example, the at least one processor 130, if receiving the user input for changing the generated sentence such as 'I had dinner at a place to sell Mexican food. It was cloudy but I was happy to have a quesadilla.' to the sentence 'I was happy to have Mexican food, quesadilla, on a cloudy day.', may be trained to generate a sentence by arrange the weather keyword first and then changing the position keyword 'a place to sell Mexican food' to 'Mexican food' derived therefrom.

If the sentence is generated as above, the at least one processor 130 may display at least one of the plurality of data, the plurality of keywords, and at least one sentence corresponding to the event related to the user on the display (S509).

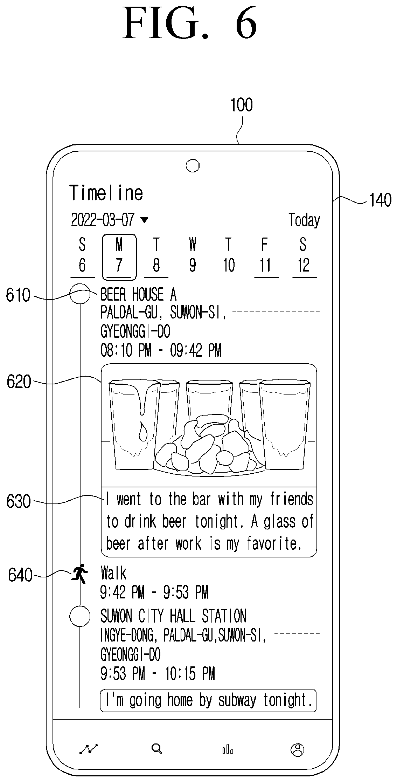

FIGS. 6 to 7 are views illustrating a process of displaying an event related to a user on a display according to an embodiment.

With reference to FIG. 6, the at least one processor 130 may display at least one of the plurality of data, the plurality of keywords, and the sentence in a timeline form on the display 140. Specifically, the at least one processor 130 may display the date and the day on an upper end of the timeline on the display 140 and may consider the plurality of data related to the determined position keyword as one event and display the data on the display 140. As an example, if the location keyword is determined as 'beer house A', the at least one processor 130 may display 'beer house A 610' as a title and display the position data and the time data below the title. Here, if the photo data 620 is obtained, the at least one processor 130 may display the photo data 620 below the position data. Further, the at least one processor 130 may display the generated sentence 630 below the photo data 620.

Also, the at least one processor 130 may consider the plurality of data related to the determined movement keyword as one event and display the data on the display 140. As an example, the at least one processor 130 may display the movement data 640 corresponding to 'walk' on the timeline and display the time data below the movement data.

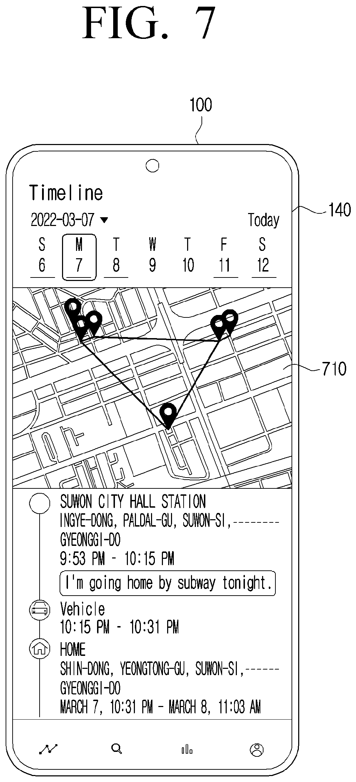

With reference to FIG. 7, the at least one processor 130 may display the plurality of location data and the plurality of movement data obtained for a day on the display 140. The at least one processor 130 may designate the obtained plurality of location data and the plurality of movement data on a map 710 and may display the map 710 on which the plurality of position data and the plurality of movement data are designated on the timeline.

As above, after an event related to the user is displayed, the at least one processor 130 may receive a user input to change at least one of the plurality of data, the plurality of keywords, and at least one sentence corresponding to the event.

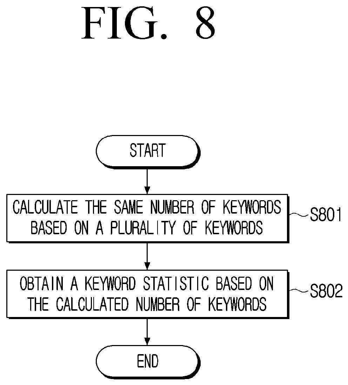

FIG. 8 is a flow chart illustrating a process of obtaining a keyword statistic according to an embodiment.

With reference to FIG. 8, the at least one processor 130 may calculate the same number of keywords based on the plurality of keywords (S801). That is, if an event related to one user is determined, the at least one processor 130 may calculate the same number of keywords based on the plurality of keywords corresponding to the event related to one user. Further, if an event related to one or more users are determined, the at least one processor 130 may calculate the same number of keywords based on the plurality of keywords corresponding to the event related to one or more users. As an example, if 'beer', 'soju', and 'food' are determined as keywords corresponding to an event of 7~8 P.M. and 'beer', 'vodka', and 'tequila' are determined as keywords corresponding to an event of 9~11 P.M., the at least one processor 130 may calculate the number of 'beer' as 2, the number of 'soju' as 1, the number of 'food' as 1, the number of 'vodka' as 1, and the number of 'tequila' as 1.

Further, the at least one processor 130 may obtain a keyword statistic based on the calculated number of keywords (S802). That is, the at least one processor 130 may obtain the keyword statistic with a method such as a histogram, a bar chart, a mosaic, a tree map, a pie chart, a line graph, a Pareto chart, or an accumulated bar chart based on the calculated number of keywords. Meanwhile, this is merely an example and the method for obtaining the keyword statistic is not limited thereto.

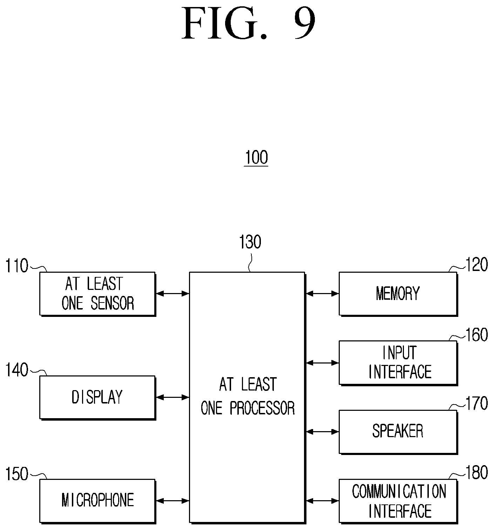

FIG. 9 is a block diagram illustrating a detailed configuration of an electronic device according to an embodiment.

With reference to FIG. 9, the electronic device 100 may include at least one sensor 110, memory 120, at least one processor 130, a display 140, a microphone 150, an input interface 160, a speaker 170, and a communication interface 180. Hereinafter, the detailed description about part overlapped with the description of FIG. 1 is omitted.

The display 140 may include various types of display panels such as a Liquid Crystal Display (LCD) panel, an Organic Light Emitting Diode (OLED) panel, an Active-Matrix Organic Light-Emitting Diode (AM-OLED) panel, a Liquid Crystal on Silicon (LcoS) panel, a Quantum dot Light-Emitting Diode (QLED) panel, and a Digital Light Processing (DLP) panel, a Plasma Display Panel (PDP), an organic LED panel, and a micro LED panel but is not limited thereto. Meanwhile, the display 140 may configure a touch screen together with a touch panel and may be configured of a flexible panel. Specifically, the display 140 may display a plurality of data, a plurality of keywords, and at least one sentence corresponding to an event related to the user. As an example, the display 140 may display the plurality of data, the plurality of keywords, and at least one sentence corresponding to an event related to the user in a timeline form.

The microphone 150 may mean a module obtaining and converting sound to an electric signal and may be a condenser microphone, a ribbon microphone, a moving coil microphone, a piezoelectric element microphone, a carbon microphone, or a Micro Electro Mechanical System (MEMS) microphone. Also, the microphone may be implemented in an omnidirectional method, a bidirectional method, a unidirectional method, a sub cardioid method, a super cardioid method, or a hyper cardioid method. That is, sound data obtained by the microphone 150 may be included in the plurality of data. Also, the electronic device 100 may receive a user input of changing a plurality of keywords or at least one sentence through the microphone 150.

The input interface 160 may include a circuit and receive a user command for setting or selecting various functions supported by the electronic device 100. For the above, the input interface 160 may include a plurality of buttons and be implemented as a touch screen capable of performing a function of a display at the same time.

In this case, the at least one processor 130 may control an operation of the electronic device 100 based on the user command inputted through the input interface 160. For example, the at least one processor 130 may control the electronic device 100 based on an on/off command of the electronic device 100, an on/off command of a function of the electronic device 100, or the like inputted through the input interface 160.

The speaker 170 may output audio sound. Specifically, the at least one processor 130 may output various alarm sound or a voice guidance message related to an operation of the electronic device 100 through the speaker 170. That is, the at least one processor 130 may output alarm sound through the speaker 170 with respect to a question related to a keyword from the user and a derivative question related to this or may directly output a question sentence.

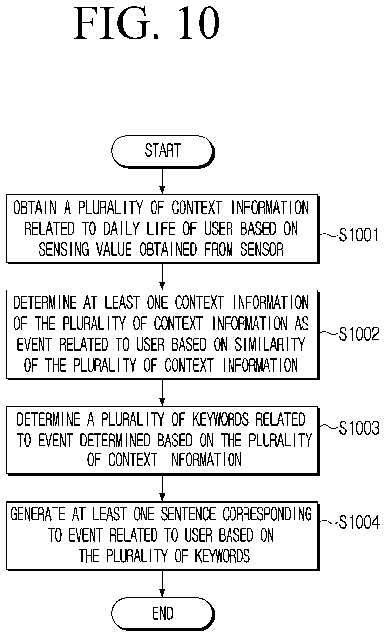

FIG. 10 is a flow chart illustrating a method of generating a sentence according to an embodiment.

With reference to FIG. 10, the method may include obtaining a plurality of data related to a daily life of a user based on a sensing value obtained from at least one sensor (S1001). Here, the plurality of data may include at least one of location data, movement data, weather data, temperature data, date data, day data, time data, or photo data.

Further, the method may include determining an event related to a user corresponding to at least one data of the plurality of data based on similarity of the plurality of data (S1002).

Thereafter, the method may include determining a plurality of keywords related to an event determined based on the plurality of data (S1003).

Then, the method may include generating at least one sentence corresponding to an event related to the user based on the plurality of keywords (S1004).

In the step S1002, the method may include calculating similarity of the plurality of data based on an AI model including at least one of the plurality of data, machine learning, a neural network, a gene, deep learning, or a classification algorithm.

Otherwise, in the step S1002, the method may include determining first position data obtained first among a plurality of position data and may calculate similarity of the plurality of data based on a distance value between the first position data and second position data obtained after the first position data.

Alternatively, in the step S1002, the method may include calculating similarity of the plurality of data based on a period in which a plurality of movement data is sustained.

In the step S1003, the method may include determining a plurality of keywords including at least one of a location keyword, a movement keyword, a weather keyword, a temperature keyword, a date keyword, a day keyword, a time keyword, or a photo keyword corresponding to the location data, the movement data, the weather data, the temperature data, the date data, the day data, the time data, or the photo data.

In the step S1004, the method may include receiving a user input corresponding to at least one of the plurality of keywords from the user. Here, the method may include changing at least one of the plurality of keywords based on the user input. Further, the method may include generating at least one sentence corresponding to the event related to the user based on the changed plurality of keywords.

In the step S1004, the method may include receiving a user input corresponding to at least one sentence from the user and change at least one sentence based on the user input.

Further, in the step S1004, the method may include, if the user input is received, analyzing at least one sentence component corresponding to the user input. Here, the method may include generating at least one sentence corresponding to an event related to the user based on the plurality of components and the plurality of keywords.

Meanwhile, the method may include displaying at least one of the plurality of data, the plurality of keywords, and the at least one sentence corresponding to an event related to the user.

Further, the method may include calculating the same number of keywords based on the plurality of keywords and obtain a keyword statistic based on the calculated number of keywords.

A function related to AI according to the disclosure operates through memory and a processor of the electronic device.

The processor may be configured of one or more processors. Here, the one or more processors may include at least one of a Central Processing Unit (CPU), a Graphic Processing Unit (GPU), or a Neural Processing Unit (NPU) but are not limited to the aforementioned examples of the processors.

The CPU is a general purpose processor capable of performing not only a general operation but also an AI operation and may efficiently perform a complex program through a multilayer cache structure. The CPU is favorable for a series processing method in which an organic connection between the previous calculation result and the next calculation result is possible through a sequential calculation. The general purpose processor is not limited to the aforementioned examples, excluding a case that the disclosure designates it as the aforementioned CPU.

The GPU is a processor for a mass operation such as a floating point operation used for graphic processing and may integrate a core massively to perform a mass operation in parallel. In particular, the GPU may be favorable for a parallel processing method such as a convolution operation compared to the CPU. Also, the GPU may be used for a co-processor for supplementing a function of the CPU. The processor for the mass operation is not limited to the aforementioned examples, excluding a case that the disclosure designates it as the aforementioned GPU.

The NPU is a processor specific to an AI operation using an artificial neural network, wherein each layer configuring the artificial neural network may be implemented as hardware (e.g. silicon). Here, the NPU is designed to be specific to the specification required by the manufacturer and thus its degree of freedom is lower than that of the CPU or the GPU but may efficiently perform the AI operation required by the manufacturer. Meanwhile, as a processor specific to the AI operation, the NPU may be implemented as various forms such as a Tensor Processing Unit (TPU), an Intelligence Processing Unit (IPU), or a Vision processing unit (VPU). The AI processor is not limited to the aforementioned examples, excluding a case that the disclosure designates it as the aforementioned NPU.

Also, one or more processors may be implemented as a System on Chip (SoC). Here, the SoC may further include memory and a network interface such as a bus for data communication between the processor and the memory besides one or more processors.

If the SoC included in the electronic device includes a plurality of processors, the electronic device may perform an operation related to AI (e.g. an operation related to learning or inference of the AI model) by using a partial processor of the plurality of processors. For example, the electronic device may perform an operation related to the AI by using at least one of a GPU, a NPU, a VPU, a TPU, or a hardware accelerator specific to the AI operation such as a convolution operation or a matrix product calculation among the plurality of processors. Meanwhile, this is merely an example and it is obvious that the operation related to the AI may be processed by using a general purpose processor such as a CPU.

Also, the electronic device may perform an operation with respect to a function related to AI by using a multicore (e.g. a dual core, a quad core) included in one processor. In particular, the electronic device may perform the AI operation such as the convolution operation and the matrix product calculation in parallel by using the multicore included in the processor.

The one or more processors may control the electronic device to process input data according to a predefined operation rule or an AI model stored in the memory. The predefined operation rule or the AI model is constructed by learning.

Here, the construction by learning means that the predefined operation rule or the AI model having a desired characteristic is constructed by applying a learning algorithm to various learning data. This learning may be performed in a device itself where the AI according to the disclosure is performed and also may be performed through a separate server/system.

The AI model may be composed of a plurality of neural network layers. At least one layer has at least one weight value and performs an operation of the layer through an operation result of the previous layer and at least one defined operation. An example of the neural network is a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), a Deep Q-Network, and a Transformer, wherein the neural network is not limited to the aforementioned example, excluding a case that the neural network is designated in the disclosure.

The learning algorithm is a method in which a given target device (e.g. a robot) is trained by using various learning data such that the given target device may make or predict a decision by itself. Examples of the learning algorithm are supervised learning, unsupervised learning, semi-supervised learning, or reinforcement learning, wherein the learning algorithm is not limited to the aforementioned examples, excluding a case that the learning algorithm is designated in the disclosure.

Meanwhile, according to an embodiment of the disclosure, various examples described above may be implemented as software including instructions stored in a machine (e.g. a computer) readable storage medium. The machine may refer to a device which calls instructions stored in the storage medium and is operable according to the called instructions, wherein the machine may include a device according to the disclosed embodiments. If the instructions are executed by at least one processor, the at least one processor may perform a function corresponding to the instructions directly or by using other components under control of the at least one processor. The instructions may include a code generated or executed by a compiler or an interpreter. The machine readable storage medium may be provided in a form of a non-transitory storage medium. Here, the term 'non-transitory storage medium' merely means that the storage medium is a tangible device and does not include a signal (e.g. an electromagnetic wave), wherein the term does not distinguish a case where data is stored semi-permanently in the storage medium from a case where data is stored temporarily therein. For example, the 'non-transitory storage medium' may include a buffer where data is temporarily stored.

According to an embodiment, a method according to various examples disclosed in the disclosure may be provided to be included in a computer program product. The computer program product may be traded between a seller and a buyer as goods. The computer program product may be distributed in a form of the machine-readable storage medium (e.g. compact disc read only memory (CD-ROM)) or on-line distributed (e.g. downloaded or uploaded) via an application store (e.g. play store^{™}) or directly between two user devices (e.g. smart phones). In the case of the on-line distribution, at least part of the computer program product (e.g. a downloadable app) may be stored at least temporarily or may be generated temporarily in the machine-readable storage medium such as memory of a server of a manufacturer, a server of an application store, or a relay server.

As the above, preferable examples of the present disclosure are shown and described. However, it is obvious that the disclosure is not limited to the aforementioned specific examples and various modifications may be implemented by those skilled in the art without deviating from the gist of the disclosure claimed in the scope of claims, wherein these modifications should not be independently understood from the technical spirit or prospect of the disclosure.

## Claims

1. An electronic device capable of generating a sentence, comprising:
at least one sensor;
memory storing at least one instruction; and
at least one processor executing the at least one instruction,
wherein the at least one processor is configured to:
obtain a plurality of data related to a daily life of a user based on a sensing value obtained from the at least one sensor;
determine an event related to the user corresponding to at least one data of the plurality of data based on a similarity of the plurality of data;
determine a plurality of keywords related to the determined event based on the plurality of data; and
generate at least one sentence corresponding to the event related to the user based on the plurality of keywords.

2. The electronic device of claim 1, wherein the at least one processor is configured to
calculate the similarity of the plurality of data based on an artificial intelligence (AI) model including at least one of the plurality of data, machine learning, a neural network, a gene, deep learning, or a classification algorithm; and
determine an event related to the user based on the similarity.

3. The electronic device of claim 1, wherein the plurality of data comprises a plurality of position data, and
wherein the at least one processor is configured to:
determine first position data obtained first among the plurality of position data;
calculate the similarity of the plurality of data based on a distance value between the first position data and second position data that is obtained after the first position data; and
determine an event related to the user based on the similarity.

4. The electronic device of claim 1, wherein the plurality of data comprises a plurality of movement data, and
wherein the at least one processor is configured to:
calculate the similarity of the plurality of data based on a period in which the plurality of movement data is sustained; and
determine an event related to the user based on the similarity.

5. The electronic device of claim 1, wherein the plurality of data corresponding to the event comprises at least one of location data, movement data, weather data, temperature data, date data, day data, time data, and photo data, and
wherein the at least one processor is configured to:
determine a plurality of keywords comprising at least one of a location keyword, a movement keyword, a weather keyword, a temperature keyword, a date keyword, a day keyword, a time keyword, and a photo keyword corresponding to the location data, the movement data, the weather data, the temperature data, the date data, the day data, the time data, and the photo data.

6. The electronic device of claim 1, wherein the at least one processor is configured to:
receive a user input corresponding to at least one of the plurality of keywords from the user;
change at least one of the plurality of keywords based on the user input; and
generate the at least one sentence corresponding to the event related to the user based on the changed plurality of keywords.

7. The electronic device of claim 1, wherein the at least one processor is configured to:
receive a user input corresponding to the at least one sentence from the user; and
change the at least one sentence based on the user input.

8. The electronic device of claim 7, wherein the at least one processor is configured to:
based on the user input being received, analyze a component of the at least one sentence corresponding to the user input; and
generate at least one sentence corresponding to the event related to the user based on the analyzed component and the plurality of keywords.

9. The electronic device of claim 1, further comprising:
a display,
wherein the at least one processor is configured to:
display, on the display, at least one of the plurality of data, the plurality of keywords, or the at least one sentence corresponding to the event related to the user.

10. The electronic device of claim 1, wherein the at least one processor is configured to:
calculate the same number of keywords based on the plurality of keywords; and
obtain a keyword statistic based on the calculated number of keywords.

11. A method of controlling an electronic device capable of generating a sentence, comprising:
obtaining a plurality of data related to a daily life of a user based on a sensing value obtained from at least one sensor;
determining an event related to the user corresponding to at least one data of the plurality of data based on a similarity of the plurality of data;
determining a plurality of keywords related to the determined event based on the plurality of data; and
generating at least one sentence corresponding to the event related to the user based on the plurality of keywords.

12. The method of claim 11, wherein the determining the event related to the user includes:
calculating the similarity of the plurality of data based on an AI model including at least one of the plurality of data, machine learning, a neural network, a gene, deep learning, or a classification algorithm; and
determining the event related to the user based on the similarity.

13. The method of claim 11, wherein the plurality of data comprises a plurality of position data, and
wherein the determining the event related to the user includes:
determining first position data obtained first among the plurality of position data;
calculating the similarity of the plurality of data based on a distance value between the first position data and second position data that is obtained after the first position data; and
determining an event related to the user based on the similarity.

14. The method of claim 11, wherein the plurality of data comprises a plurality of movement data, and
wherein the determining the event related to the user comprises:
calculating the similarity of the plurality of data based on a period in which the plurality of movement data is sustained; and
determining the event related to the user based on the similarity.

15. The method of claim 11, wherein the plurality of data corresponding to the event comprises at least one of location data, movement data, weather data, temperature data, date data, day data, time data, and photo data, and
wherein the determining the plurality of keywords comprises:
determining a plurality of keywords comprising at least one of a location keyword, a movement keyword, a weather keyword, a temperature keyword, a date keyword, a day keyword, a time keyword, and a photo keyword corresponding to the location data, the movement data, the weather data, the temperature data, the date data, the day data, the time data, and the photo data.
